Europäisches Patentamt

European Patent Office

Office européen des brevets

(11) Publication number: **0 487 910 A1**

# EUROPEAN PATENT APPLICATION

(21) Application number: **91118356.4**

(22) Date of filing: **28.10.91**

(51) Int. Cl.5: **G06F 13/42**

(30) Priority: **27.11.90 JP 324310/90**

(43) Date of publication of application:
**03.06.92 Bulletin 92/23**

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Nakajima, Shuzo, c/o Intellectual**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) **Portable computer for varying read/write cycle according to type of memory card.**

(57) Whether or not an extension memory card is connected to a portable computer is checked by referring to a specific pin of the extension memory card. If the extension memory card is connected, it is checked if the connected memory card is one operated at high speed or one operated at low speed. In order to attain a read/write cycle corresponding to the operation speed of the connected extension memory card, if the extension memory card operated at high speed is connected, a 1-wait value is set in an I/O register, and when the memory card operated at low speed is connected, a 2-wait value is set in the I/O register. The extension memory card is accessed in the read/write cycle based on the wait value set in the I/O register.

F I G. 2

EP 0 487 910 A1

The present invention relates to a portable computer having a connection port for an extension memory and, more particularly, to a portable computer having an extension memory interface mechanism which can support old and new type extension memory cards having different operation speeds.

In recent years, various lap-top type portable computers, which are readily carried, and can be driven by batteries, have been developed. A portable computer of this type allows use of not only external storages having rotary drive mechanisms, such as a floppy disk drive, a hard disk drive, and the like, but also storage devices such as memory cards which incorporate semiconductor memory chips. As the memory cards, 4-MB (megabytes) and 8-MB memory cards whose storage capacities are increased from those of existing memory cards having storage capacities of 1 MB and 2 MB are available.

In this case, the existing memory card (1 or 2 MB) and the new memory card (4 or 8 MB) have not only different storage capacities but also different operation speeds. The new memory card has a higher operation speed than that of the existing memory card. Therefore, in order to utilize the performance of the new memory card, the existing memory card cannot be used. On the other hand, when both the existing and new memory cards are used, the performance of the new memory card cannot be utilized.

It is an object of the present invention to provide a portable computer having a mechanism which allows use of a plurality of types of (e.g., old and new) extension memories having different storage capacities and operation speeds by means of a common connection interface while sufficiently utilizing the performance of a new memory card.

According to the first aspect of the present invention, a portable computer having a connection port for an extension memory operated at high speed, and an extension memory operated at low speed, comprises: parameter storage means for storing a parameter for varying a read/write cycle of the extension memory; first judgment means for judging whether or not an extension memory is connected to the connection port; second judgment means for, when an extension memory is connected to the connection port, judging whether the extension memory is the extension memory operated at high speed or the extension memory operated at low speed; means for, when the second judgment means determines the extension memory operated at high speed, setting a first parameter indicating a high-speed read/write cycle in the parameter storage means, and for, when the second judgment means determines the extension memory operated at low speed, setting a second parameter indicating a low-speed read/write cycle in the parameter storage means; and means for accessing the extension memory in the read/write cycle indicated by the parameter stored in the parameter storage means.

According to the second aspect of the present invention, a portable computer having a connection port for extension memories having different storage capacities, comprises: parameter storage means for storing a parameter for varying a read/write cycle of the extension memory; first judgment means for judging whether or not an extension memory is connected to the connection port; second judgment means for, when an extension memory is connected to the connection port, judging a capacity of the extension memory; means for setting the parameter for varying the read/write cycle of the extension memory in the parameter storage means in accordance with the capacity determined by the second judgment means; and means for accessing the extension memory in the read/write cycle indicated by the parameter stored in the parameter storage means.

According to the present invention, old and new extension memories having different operation speeds and storage capacities can be used by a common connection interface while sufficiently utilizing the performance of a new memory card having a higher operation speed.

This invention can be more fully understood from the following detailed description when taken in conjunction with the accompanying drawings, in which:

Fig. 1 is a system block diagram of a portable computer according to an embodiment of the present invention;

Fig. 2 is a detailed circuit diagram of a wait control circuit shown in Fig. 1;

Fig. 3 is a flow chart showing an initial setting routine for setting a wait value in the embodiment shown in Fig. 1; and

Figs. 4A through 4D are timing charts for explaining data read/write operations corresponding to wait values in the embodiment shown in Fig. 1.

An embodiment of the present invention will be described below with reference to the accompanying drawings.

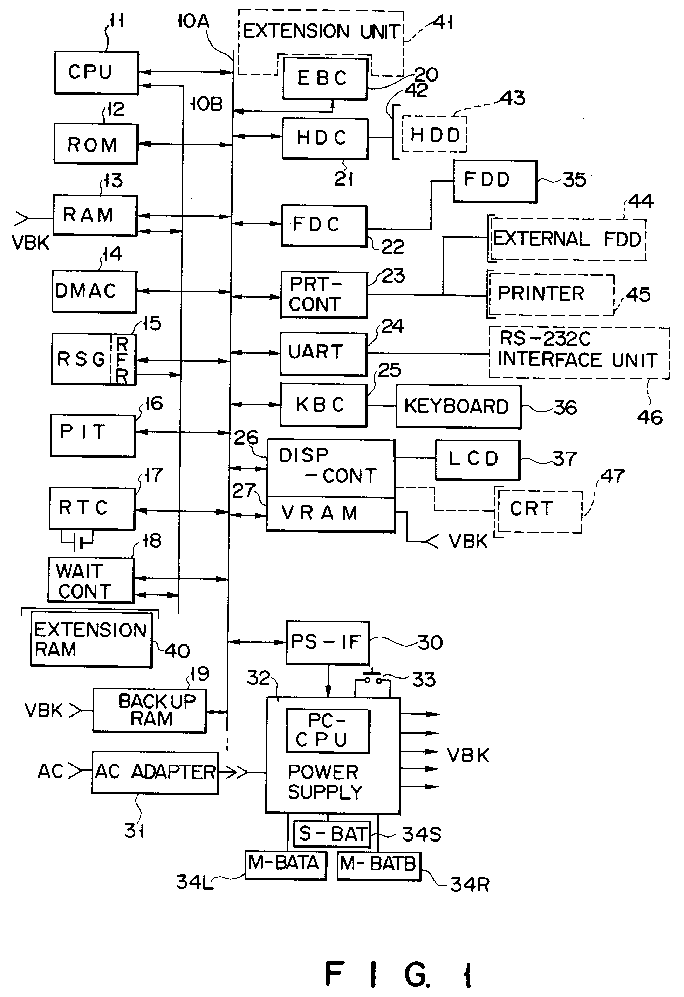

Fig. 1 is a block diagram showing an arrangement of a portable computer according to an embodiment of the present invention.

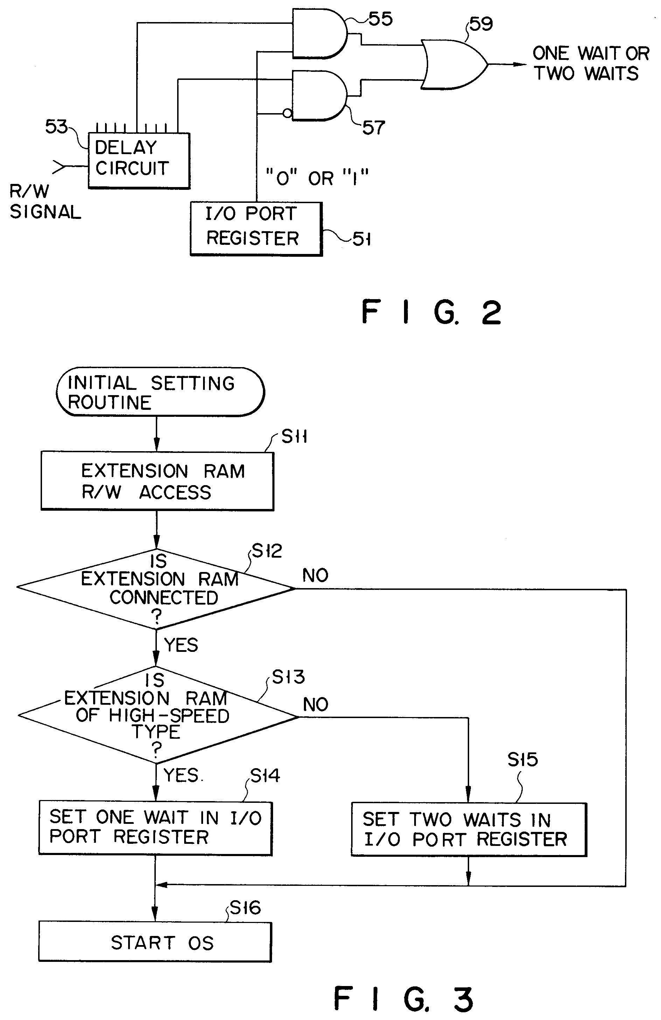

In Fig. 1, reference numeral 10A denotes a system bus; and 10B, an internal bus. Reference numerals 11 through 30 are components to be connected to the system bus 10A. Of these components, reference numeral 11 denotes a CPU (main CPU) for controlling the overall system. The CPU 11 accesses a BIOS-ROM 12 upon power-on, and executes initialization processing including an initial setting routine for setting a wait value (1 wait/2 waits) in an I/O port register of a wait controller 18 shown in Fig. 3.

Reference numeral 12 denotes the BIOS-RAM for storing, e.g., a permanent program. The initialization processing program includes processing routines for executing processing operations shown in Fig. 3.

Reference numeral 13 denotes a RAM constituting a main memory for storing a program, data, and the like to be processed; and 14, a DMA controller (DMAC; Direct Memory Access Controller) for performing direct memory access control.

Reference numeral 15 denotes a refresh signal generator (RSG) for generating a refresh signal used in a memory refresh operation. The refresh signal generator 15 selectively outputs a memory refresh signal onto the system bus 10A or the internal bus 10B in accordance with the content of a control bit (C) of a refresh control register (RFR).

Reference numeral 16 denotes a programmable interval timer (PIT), which includes a programmable interrupt controller (PIC). Reference numeral 17 denotes a real-time clock (RTC) which has a self-operation battery, and stores data such as date data, time data, system control data, and the like which must always be preserved.

Reference numeral 18 denotes the wait controller (WAIT-CONT) for switching a wait time for determining a read/write cycle time in accordance with the type of extension RAM 40 (in this embodiment, assume that an old type low-speed memory card comprises a 1- or 2-MB RAM, and a new type high-speed memory card comprises a 4- or 8-MB RAM) to be mounted on a special-purpose card slot of the main body, and controlling access of the mounted extension RAM (memory card) 40. The wait controller 18 has the I/O port register in which a wait value is set under the control of the CPU 11 in the initial setting processing. When the wait value (1 wait/2 waits) is set in the I/O port register in the initial setting processing, every time the mounted extension RAM (memory card) 40 is accessed, the wait controller 18 performs access control of the mounted extension RAM (memory card) 40 in a read/write cycle corresponding to the wait value (1 wait/2 waits) set in the register. The wait controller 18 has a delay circuit 53 with taps, as shown in Fig. 2. The taps of the delay circuit 53 output different delay amounts. The different delay amounts (corresponding to 1- and 2-wait values in this embodiment) from the delay circuit 53 are applied to one input terminal of a first AND gate 55 and one input terminal of a second AND gate 57. The other input terminal of each of the AND gates 55 and 57 receives a parameter, supplied from an I/O port register 51, for varying a read/write cycle.

In this embodiment, when the 1-wait value is selected, logic "0" is applied; when the 2-wait value is selected, logic "1" is applied. The output signals from the AND gates 55 and 57 are applied to the input terminals of an OR gate 59, and are logically ORed, thus outputting the 1- or 2-wait value.

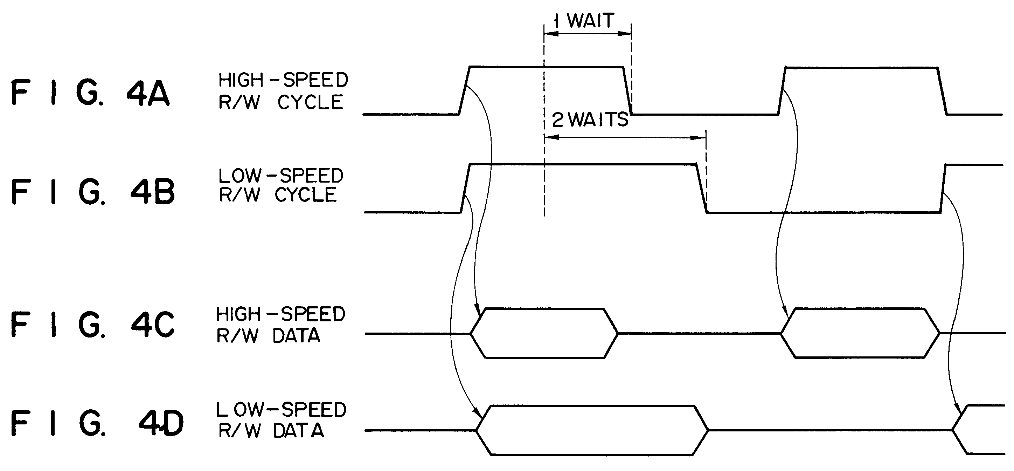

Figs. 4A through 4D show read/write cycles corresponding to these two wait values (1 wait/2 waits), and corresponding data read/write timings.

Reference numeral 19 denotes a backup RAM serving as a data storage area for realizing a resume function. The backup RAM 19 is supplied with a backup power supply (VBK).

Reference numeral 20 denotes an extension bus connector (EBC), to which various extension optional devices such as an extension memory board, a communication board, and the like, mounted on an extension unit 41 are connected.

Reference numeral 21 denotes a hard disk controller (HDC) for interface-connecting a hard disk pack to be stored in the main body when the portable computer main body is upgraded to a hard-disk (HDD) mount type (which mounts one HDD and one FDD). When the portable computer main body is upgraded, the hard disk controller 21 is interface-connected to a hard disk pack 43 via an internal connector 42 arranged in a hard disk storage portion in the main body.

Reference numeral 22 denotes a floppy disk controller (FDC), which can control one floppy disk drive (FDD) 35.

Reference numeral 23 denotes a printer controller (PRT-CONT) to which, e.g., a 5" external floppy disk drive 44, a printer 45, or the like is selectively connected via a connector. Reference numeral 24 denotes an input/output interface (UART; Universal Asynchronous Receiver/Transmitter), to which an RS-232C interface device 46, or the like is connected, as needed. Reference numeral 25 denotes a keyboard controller (KBC) for controlling inputs from a keyboard 36 integrally arranged on the apparatus main body which packages a CPU board. Reference numeral 26 denotes a display controller (DISP-CONT). In this embodiment, the display controller 26 drives only an LCD 37 with a backlight (or side light), which is packaged in a display unit housing pivotally arranged on the apparatus main body. In addition, the display controller 26 can also control a display drive operation of a CRT display unit 47 as an external display. Reference numeral 27 denotes a video RAM (VRAM) supplied with the backup power supply (VBK). Reference numeral 30 denotes a power supply control interface (PS-IF) for connecting a power supply circuit (intelligent power supply) 32 to the CPU 11 via the system bus 10A. The power supply control interface 30 has a serial-parallel conversion function for performing a data transfer operation with a power control CPU (PC-CPU) of the power supply circuit 32 using a serial interface. Reference numeral 31 denotes a power supply adapter (to be referred to as an AC adapter hereinafter) for rectifying and smoothing a commercial AC power supply to obtain a DC operation power supply of a predetermined potential. The AC adapter is plug-in-connected to the portable computer main body. Reference numeral 32 denotes the power supply circuit (intelligent power supply) comprising the power control CPU (PC-CPU); 33, a power switch for turning on/off the power supply of the portable computer main body; and 34L and 34R, main battery packs (M-BATA and M-BATB) which comprise rechargeable batteries, and are detachable from the apparatus main body (PC main body). In this embodiment, one of these batteries is selected as a battery to be used (battery for supplying a power supply voltage) under the control of the power supply circuit 30, and when the selected battery is discharged to its use limit, the battery to be used is switched, and the other battery is used. Reference numeral 34S denotes a sub battery (S-BAT) which also comprises a rechargeable battery, and is incorporated in the main body. The sub battery 34S supplies a backup power supply voltage (VBK) to memories to be backed up, such as the RAM 13, the extension RAM 40, the VRAM 27, and the like.

Reference numeral 40 denotes the extension RAM which can be inserted/removed in/from the special-purpose card slot of the portable computer main body. In this embodiment, an arbitrary one of four different memory cards including existing (old type) 1-and 2-MB memory cards, and new (new type) 4- and 8-MB memory cards is mounted. In this case, the old type memory card (1 MB or 2 MB) and the new (new) type memory card (4 MB or 8 MB) have different read/write access times. The old type memory card (1 MB or 2 MB) requires a wait (2 waits) time twice that of the new type memory card (4 MB or 8 MB). In order to realize a memory card interface common to both the old and new type memory cards, the wait controller 18 switches a wait value (1 wait/2 waits) in accordance with the mounted extension RAM (memory card) 40. This wait value is set in the I/O port register in the wait controller 18 in the initial setting processing under the control of the CPU 11. Every time the mounted extension RAM 40 is to be accessed, the wait controller 18 performs access control of the mounted extension RAM (memory card) 40 in the read/write cycle corresponding to the wait value (1 wait/2 waits) set in the register.

Reference numeral 41 denotes the extension unit selectively connected to the extension bus connector (EBC) 20. Various extension optional devices such as an extension memory board, a communication board, and the like are mounted on the extension unit 41. Reference numeral 42 denotes the internal connector for interface-connecting the hard disk pack stored in the main body when the portable computer main body is upgraded to a hard-disk (HDD) mount type (which mounts one HDD and one FDD). The hard disk pack 43 is interface-connected via the connector 42.

Fig. 3 is a flow chart showing an initial setting routine for setting a wait value (1 wait/2 waits) in the I/O port register of the wait controller 18.

Figs. 4A through 4D show read/write cycles according to the wait values (1 wait/2 waits), and corresponding data read/write timings in this embodiment. Fig. 4A shows a high-speed read/write (R/W) cycle in a 1-wait mode, Fig. 4B shows a low-speed read/write cycle in a 2-wait mode, Fig. 4C shows a high-speed data read/write timing in the high-speed read/write cycle, and Fig. 4D shows a low-speed data read/write timing in the low-speed read/write cycle. In this case, the old type memory card (1 or 2 MB) is access-controlled in the low-speed read/write cycle in the 2-wait mode, and the new type memory card (4 or 8 MB) is access-controlled in the high-speed read/write cycle in the 1-wait mode.

The operations according to the embodiment of the present invention will be described below with reference to Figs. 1 through 4D.

When the power supply is turned on upon operation of the power switch 33, and a normal system power supply voltage is supplied from the power supply circuit 32 to the respective components in the main body, the CPU 11 accesses the BIOS-ROM 12 to execute the initial setting routine. In this routine, the CPU 11 executes processing for setting a wait value (1 wait/2 waits) for determining the read/write cycle of the extension RAM (memory card) 40, as shown in Fig. 3.

After normal initial setting processing upon power-on is executed, the presence/absence of connection of the extension RAM (memory card) 40, and the memory size of the mounted memory card 40 are checked by read/write-accessing the address area of the extension RAM (memory card) 40. In this case, the presence/absence of connection of the memory card can be determined in such a manner that a specific pin of the memory card is read through an I/O port, and it is checked if the specific pin is set at high or low level. The memory size (1 MB/2 MB/4 MB/8 MB) of the memory card can be determined in such a manner that specific addresses of the mounted memory card 40 are read/write-accessed in units of capacities of 1 MB, 2 MB, 4 MB, and 8 MB, and written data is verified with readout data (steps S11, S12, and S13 in Fig. 2).

If it is determined that the mounted memory card 40 has a memory size of 4 or 8 MB (step S13), the CPU 11 sets a wait value corresponding to the high-speed read/write cycle, i.e., 1 wait in the I/O port register 51 of the wait controller 18 (step S14). Thereafter, the CPU executes normal OS start processing (step S16). In this manner, when the 1-wait value is set in the I/O port register, the CPU 11 executes the high-speed read/write cycle in the 1-wait mode shown in Fig. 4A for the mounted memory card 40, i.e., the new type memory card (4 MB/8 MB) in accordance with the set content of the I/O port register. The data read/write timing in this case is set in a high-speed mode, as shown in Fig. 4C.

On the other hand, if it is determined that the mounted memory card 40 has a memory size of 1 or 2 MB (step S13), the CPU 11 sets a wait value corresponding to the low-speed read/write cycle, i.e., 2 waits, in the I/O port register of the wait controller 18 (step S15). Thereafter, the CPU executes normal OS start processing (step S16). In this manner, when the 2-wait value is set in the I/O port register, the CPU 11 executes the low-speed read/write cycle in the 2-wait mode shown in Fig. 4B for the mounted memory card 40, i.e., the old type memory card (1 MB/2 MB) in accordance with the set content of the I/O port register. The data read/write timing in this case is set in a low-speed mode, as shown in Fig. 4D.

In this manner, according to this embodiment, the type of the mounted memory card 40 (the low- or high-speed memory card) is determined based on the memory size of the memory card, and an inherent wait value corresponding to the type of the memory card, i.e., its operation speed, is set in the I/O port register. The mounted memory card 40 is access-controlled in a read/write cycle according to the set wait value. For this reason, both the two different, i.e., old and new, extension memories having different operation speeds and storage capacities can be used by a common connection interface.

Whether the mounted memory card 40 is of high- or low-speed type is determined by executing processing for reading a storage capacity upon verification between written data and readout data. For example, an identifier such as a notch may be formed on the mounted memory card 40, and may be detected/read in a hardware manner so as to determine the type of the mounted memory card 40.

## Claims

1. A portable computer having a connection port for an extension memory operated at high speed, and an extension memory operated at low speed, comprising:

parameter storage means (51) for storing a parameter for varying a read/write cycle of the extension memory;

first judgment means (11) for judging whether or not an extension memory is connected to said connection port;

second judgment means (11) for, when an extension memory is connected to said connection port, judging whether the extension memory is the extension memory operated at high speed or the extension memory operated at low speed;

means (11) for, when said second judgment means determines the extension memory operated at high speed, setting a first parameter indicating a high-speed read/write cycle in said parameter storage means, and for, when said second judgment means determines the extension memory operated at low speed, setting a second parameter indicating a low-speed read/write cycle in said parameter storage means; and

means (11) for accessing the extension memory in the read/write cycle indicated by the parameter stored in said parameter storage means.

2. A portable computer having a connection port for extension memories having different storage capacities, comprising:

parameter storage means (51) for storing a parameter for varying a read/write cycle of the extension memory;

first judgment means (11) for judging whether or not an extension memory is connected to said connection port;

second judgment means (11) for, when an extension memory is connected to said connection port, judging a capacity of the extension memory;

means (11) for setting the parameter for varying the read/write cycle of the extension memory in said parameter storage means in accordance with the capacity determined by said second judgment means; and

means (11) for accessing the extension memory in the read/write cycle indicated by the parameter stored in said parameter storage means.

F I G. 1

55

59

ONE WAIT OR
TWO WAITS

53

DELAY
CIRCUIT

57

R/W
SIGNAL

"0" OR "1"

I/O PORT
REGISTER

51

# F I G. 2

INITIAL SETTING
ROUTINE

S11

EXTENSION RAM
R/W ACCESS

S12

IS
EXTENSION RAM
CONNECTED
?

NO

YES

S13

IS
EXTENSION RAM
OF HIGH-SPEED
TYPE
?

NO

YES.

S14

S15

SET ONE WAIT IN I/O
PORT REGISTER

SET TWO WAITS IN
I/O PORT REGISTER

S16

START OS

# F I G. 3

7

F I G. 4A    HIGH−SPEED R/W CYCLE

F I G. 4B    LOW−SPEED R/W CYCLE

F I G. 4C    HIGH−SPEED R/W DATA

F I G. 4D    LOW−SPEED R/W DATA

1 WAIT

2 WAITS

EP 0 487 910 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 386 935 (CANON K.K.)<br>* column 1, line 6 - line 36 *<br>* column 1, line 47 - column 2, line 11 *<br>* column 2, line 15 - line 48 *<br>* column 4, line 8 - line 37 *<br>* figure 1 *<br>--- | 1-2 | G06F13/42 |
| X | EP-A-0 253 095 (TEXAS INSTRUMENTS INC.)<br>* page 63, line 2 - line 13 *<br>* page 64, line 17 - line 26 *<br>* abstract; figures 3,4A *<br>--- | 1-2 | |
| A | EP-A-0 058 795 (GENRAD INC.)<br>* page 2, line 11 - page 3, line 5 *<br>* page 4, line 17 - page 5, line 10 *<br>* figure 1 *<br>--- | 1-2 | |
| A | US-A-4 769 764 (I. LEVANON)<br>* column 1, line 32 - line 46 *<br>* column 5, line 49 - column 6, line 61 *<br>* figures 7A,7B *<br><br>----- | 1-2 | TECHNICAL FIELDS SEARCHED (Int. Cl.5)<br><br>G06F |

The present search report has been drawn up for all claims

| Place of search | Date of completion of the search | Examiner |
|---|---|---|
| THE HAGUE | 13 MARCH 1992 | NGUYEN X.H.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)